(19) Europäisches Patentamt
European Patent Office
Office européen des brevets

(11) **EP 1 796 073 A2**

(12) **EUROPEAN PATENT APPLICATION**

(43) Date of publication:
**13.06.2007 Bulletin 2007/24**

(51) Int Cl.:
*G09G 3/36* (2006.01)

(21) Application number: **06025299.6**

(22) Date of filing: **07.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.12.2005 KR 20050120740**

(71) Applicant: **Samsung Electronics Co., Ltd.**
**Yeongtong-gu**
**Suwon-city, Gyeonggi-do 442-742 (KR)**

(72) Inventor: **Lee, Baek-Woon**
**Yongin-si**
**Gyeonggi-do (KR)**

(74) Representative: **Weitzel, Wolfgang**
**Dr. Weitzel & Partner**
**Patentanwälte**
**Friedenstrasse 10**
**89522 Heidenheim (DE)**

(54) **Display device**

(57) A display device includes a plurality of gate lines transmitting gate signals wherein each gate signal has a gate-on voltage and a gate-off voltage, a plurality of data lines intersecting the gate lines and transmitting data voltages, a plurality of storage electrode lines extending in parallel to the gate lines and transmitting storage signals, a plurality of pixels arranged in a matrix wherein each pixel includes a switching element connected to a gate line and a data line, a liquid crystal capacitor connected to the switching element and a common voltage, a storage capacitor connected to the switching element and a storage electrode line, and a plurality of storage signal generators generating the storage signals based on the gate signals. The storage signal applied to each pixel has a changed voltage level immediately after the charging the data voltage into the liquid crystal capacitor and the storage capacitor is completed.

FIG.1

**Description**

CROSS-REFERENCE TO RELATED APPLICATION

This application claims priority to and the benefit of Korean Patent Application No. 10-2005-0120740 filed in the Korean Intellectual Property Office on December 09, 2005, the entire contents of which are incorporated herein by reference.

Field of the Invention

The present invention relates to a display device.

Description of the Related Art

In general, a liquid crystal display includes two display panels having pixel electrodes, a common electrode, and a liquid crystal layer having dielectric anisotropy between the panels. The pixel electrodes are arranged in a matrix and connected to switching devices such as thin film transistors (TFTs) which sequentially apply data voltages to the pixels. The common electrode is disposed over the entire surface of the display panel and supplied with a common voltage. The pixel electrode, the common electrode, and the liquid crystal layer constitute a liquid crystal capacitor. The liquid crystal capacitor together with the switching element is a pixel unit.

The image data voltages vary the strength of the electric field applied to the liquid crystal layer between the two panels thereby controlling the transmittance of light passing through the liquid crystal layer to display images corresponding to the data voltages. To prevent the degradation of the liquid crystal, the polarities of the data voltages with respect to the common voltage are inverted for each frame, pixel row, or pixel.

However, since the response speed of the liquid crystal molecules is low, it takes time for a voltage (hereinafter referred to as a pixel voltage) charged in the liquid crystal capacitor to reach the target voltage. The target voltage is the voltage that effects a desired luminance. The time depends on the difference between the target voltage and the voltage previously charged on the liquid crystal capacitor. Therefore, when the difference between the target voltage and the previously-charged voltage is large, application of only the target voltage will not be enough to cause the pixel voltage to reach the target voltage during the time when the switching element is turned on.

In order to solve the problem, a DCC (dynamic capacitance compensation) scheme has been proposed. The DCC scheme employs the fact that charging speed is proportional to the voltage across the liquid crystal capacitor. The data voltage (actually the difference between the data voltage and the common voltage, usually assumed to be 0V), applied to the pixel is chosen to be higher than the target voltage so as to shorten the time taken for the pixel voltage to reach the target voltage. However, in the DCC scheme, frame memories and driving circuits for performing DCC calculation are needed. Therefore, there are problems of a difficulty in circuit design and increased production cost.

To reduce power consumption in display devices of medium or small size, such as mobile phones, row inversion is performed. However, as the resolution of medium or small size display devices increases, so does power consumption. In particular, when the DCC calculation is performed, power consumption is greatly increased due to the additional calculations and circuitry.

The range of data voltage available for image display using row inversion is small in comparison with dot inversion where the polarities of the data voltages are inverted for each pixel. Therefore, in a VA (vertical alignment) mode liquid crystal display, if the threshold voltage for driving the liquid crystal is high, the available range of the data voltage to represent grayscales for image display is reduced by the amount of the threshold voltage. Therefore, the desired luminance cannot be obtained.

SUMMARY OF THE INVENTION

In accordance with an aspect of the present invention a display device offers improved response speed and image quality without increasing power consumption. According to an embodiment of the present invention, a display device includes a plurality of gate lines transmitting gate signals, each gate signal having a gate-on voltage and a gate-off voltage, a plurality of data lines intersecting the gate lines and transmitting data voltages, a plurality of storage electrode lines extending in parallel to the gate lines and transmitting storage signals, a plurality of pixels arranged in a matrix, each pixel including a switching element connected to a gate line and a data line, a liquid crystal capacitor, a storage capacitor connected to the switching element and a storage electrode line, and a plurality of storage signal generators generating the storage signals based on the gate signals. The voltage level of the storage signal applied to each pixel is changed immediately after charging the liquid crystal capacitor and the storage capacitor with the data voltage, as follows: when the charged data voltage has a positive polarity, the storage signal is changed from a low level to a high level, and when the charged data voltage has a negative polarity, the storage signal is changed from the high level to a low level. The gate-on voltage may be maintained for about 1 H.

The storage signals applied to adjacent storage electrode lines may have different levels from each other, and the storage signal applied to the same storage electrode line may be inverted every frame.

The display device may perform row inversion. The storage signal generator may be formed along with the gate lines, the data lines, and the storage electrode lines. The storage signal generator may include a plurality of signal generating circuits that respectively output the storage signals to the storage electrode lines. The driving voltage may include a first level and a second level less than the first level, and the level of the driving voltage may be inverted every about 1H.

The first and second driving voltages may include a first level and a second level less than the first level, respectively, the first driving voltage has a waveform that is inverted with respect to a waveform of the second driving voltage, and the first and second driving voltages are inverted every frame.

The display device may further include a first conductor transmitting the first driving voltage and a second conductor transmitting the second driving voltage and that is adjacent to the first conductor in a longitudinal direction, the positions of the first conductor and the second conductor are changed every pixel row, and the input terminals of the first and second switching elements are connected to the adjacent conductor, respectively.

The display device may further include a first conductor transmitting the first driving voltage and a second conductor transmitting the second driving voltage and that is parallel to the first conductor in a longitudinal direction, and the connection between the input terminals of the first and second switching elements and the first and second conductors are changed ever pixel row.

The respective signal generating circuits may include a first driving voltage having a first level, a second driving voltage having a second level different from the first level, a first selection voltage, a second selection voltage having a waveform that is inverted with respect to a waveform of the first selection voltage, a first switching element having an input terminal connected to the first selection voltage and a control terminal connected to a gate line, a second switching element having an input terminal connected to the second selection voltage and a control terminal connected to the gate line, a third switching element having a control terminal connected to an output terminal of the first switching element and an output terminal connected to a corresponding storage electrode line, and a fourth switching element having a control terminal connected to an output terminal of the second switching element and an output terminal connected to the storage electrode line. The third switching element has an input terminal connected to one of the first and second driving voltages, and the fourth switching element has an input terminal connected to another of the first and second driving voltages.

The first and second selection voltages may include a third level and a fourth level less than the third level, respectively, the first selection voltage has a waveform that is inverted with respect to a waveform of the second selection voltage, and the first and second selection voltages are inverted every frame.

The display device may further include a first conductor transmitting the first driving voltage and a second conductor transmitting the second driving voltage and that is adjacent to the first conductor in a longitudinal direction, the positions of the first conductor and the second conductor are changed every pixel row, and the input terminals of the third and fourth switching elements are connected to the adjacent conductor, respectively.

The storage signal generator may indude a shift register having a plurality of stages that are connected to the storage electrode lines, respectively.

The storage signal generator may further include a plurality of inverters connected to odd-numbered stages or even-numbered stages.

The shift register may be an integrated circuit.

<u>BRIEF DESCRIPTION OF THE DRAWING</u>

An exemplary embodiment of the present invention will be described in detail with reference to the accompanying drawing, in which:

FIG. 1 is a block diagram of a liquid crystal display according to an exemplary embodiment of the present invention;

FIG. 2 is an equivalent circuit diagram of one pixel in the liquid crystal display according to an exemplary embodiment of the present invention;

FIG. 3 is a circuit diagram of an example of a signal generating circuit according to an exemplary embodiment of the present invention;

FIG. 4 is a timing diagram of signals used in the liquid crystal display including the signal generating circuit shown in FIG. 3;

FIGs. 5A and 5B are circuit diagrams of further examples of a signal generating circuit according to an exemplary embodiment of the present invention;

FIG. 6 is a timing diagram of signals used in the liquid crystal display including the signal generating circuit shown in FIG. 5A or 5B;

FIG. 7 is a circuit diagram of a further example of a signal generating circuit according to a further exemplary embodiment of the present invention;

FIG. 8 is a timing diagram of signals used in the liquid crystal display including the signal generating circuit shown in FIG. 7;

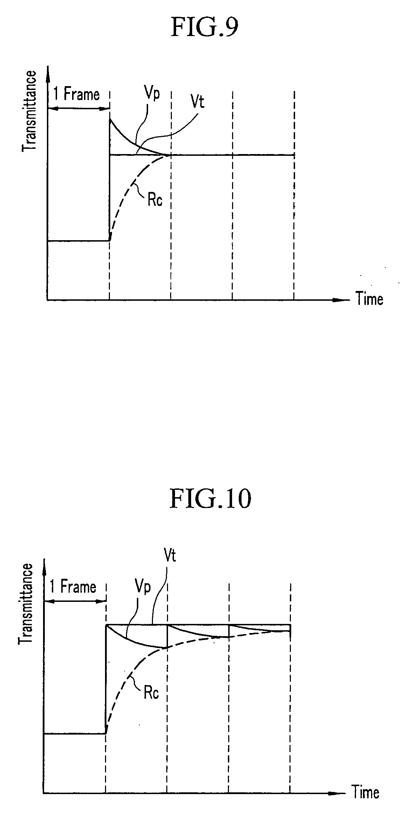

FIG. 9 is a graph showing a change in a response speed of liquid crystal and a pixel electrode voltage according to the operation of the signal generating circuit according to exemplary embodiments of the present invention;

FIG. 10 is a graph showing a change in a response speed and pixel electrode voltage in a liquid crystal display of the prior art;

FIG. 11 is a layout view of an example of a thin film transistor array panel in a liquid crystal display according to embodiments of the present invention;

FIGs. 12A and 12B are cross-sectional views of the thin film transistor array panel taken along lines XIIA-XIIA and XIIB-XIIB of FIG. 11, respectively;

FIG. 13 is a layout view of another example of a thin film transistor array panel in a liquid crystal display according to embodiments of the present invention; and

FIGs. 14A and 14B are cross-sectional views of the thin film transistor array panel taken along lines XIVA-XIVA and XIVB-XIVB of FIG. 13, respectively.

## DETAILED DESCRIPTION OF THE EMBODIMENTS

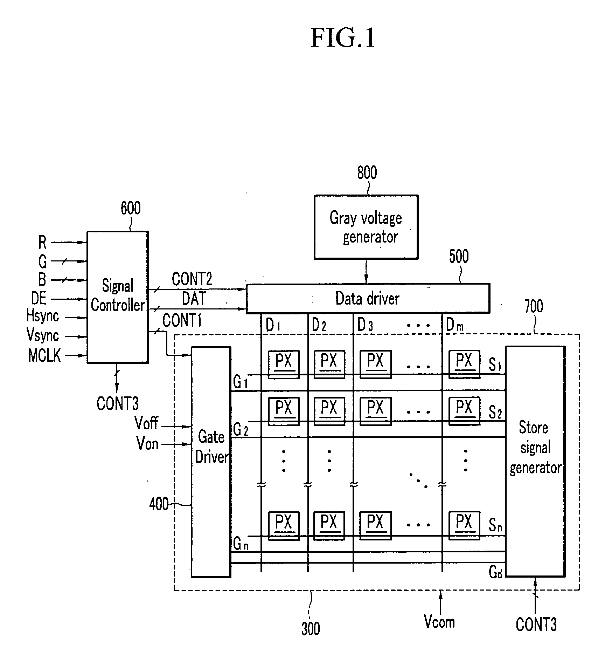

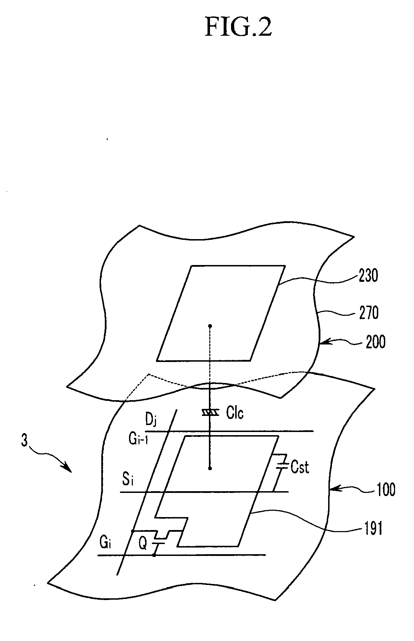

In the drawings, the thickness of layers, films, panels, regions, etc., are exaggerated for clarity. It will be understood that when an element such as a layer, film, region, or substrate is referred to as being "on" another element, it can be directly on the other element or intervening elements may also be present. In contrast, when an element is referred to as being "directly on" another element, there are no intervening elements present. A liquid crystal display according to an exemplary embodiment of the present invention will be described in detail with reference to FIGs. 1 and 2.

FIG. 1 is a block diagram of a liquid crystal display according to an exemplary embodiment of the present invention, and FIG. 2 is an equivalent circuit diagram of one pixel in the liquid crystal display according to an exemplary embodiment of the present invention.

As shown in FIG. 1, the liquid crystal display includes a liquid crystal panel assembly 300, a gate driver 400, a data driver 500, a storage signal generator 700, a gray voltage generator 800 connected to the data driver 500, and a signal controller 600 that controls these components.

The liquid crystal panel assembly 300 includes a plurality of signal lines $G_1$-$G_n$, $G_d$, $D_1$-$D_m$, and $S_1$-$S_n$, and a plurality of pixels PX connected to the signal lines $G_1$-$G_n$. $G_d$, $D_1$-$D_m$, and $S_1$-$S_n$ and arranged substantially in a matrix. In the structural view shown in FIG. 2, the liquid crystal panel assembly 300 includes lower and upper panels 100 and 200 facing each other and a liquid crystal layer 3 interposed between the panels 100 and 200. The signal lines include a plurality of gate lines $G_1$-$G_n$ and $G_d$, a plurality of data lines $D_1$-$D_m$, and a plurality of storage electrode lines $S_1$-$S_n$.

The gate lines $G_1$-$G_n$ and $G_d$ include a plurality of normal gate lines $G_1$-$G_n$ and an additional gate line $G_d$ transmitting gate signals (also referred to as "scanning signals" hereinafter). The storage electrode lines $S_1$-$S_n$ are alternately connected to the normal gate lines $G_1$-$G_n$ and transmit storage signals. The data lines $D_1$-$D_m$ transmitting data voltages.

The gate lines $G_1$-$G_n$ and $G_d$ and the storage electrode lines $S_1$-$S_n$ extend substantially in a row direction and substantially parallel to each other, while the data lines $D_1$-$D_m$ extend substantially in a column direction and substantially parallel to each other.

Referring to Fig. 2, each pixel PX, for example a pixel PX connected to the i-th normal gate line $G_i$ (i=1, 2, ..., 2n) and the j-th data line $D_j$ (j=1, 2, ..., m), includes a switching element Q connected to the signal lines $G_i$ and $D_j$, and a liquid crystal capacitor Clc and a storage capacitor Cst that are connected to the switching element Q.

Switching element Q is a three terminal element such as a thin film transistor, and is disposed on the lower panel 100. Switching element Q has a control terminal connected to the normal gate line $G_i$, an input terminal connected to the data line $D_j$, and an output terminal connected to the liquid crystal capacitor Clc and storage capacitor Cst.

Liquid crystal capacitor Clc includes pixel electrode 191 of the lower panel 100 and common electrode 270 of the upper panel 200 as two terminals, and liquid crystal layer 3 interposed between the two electrodes as a dielectric. Pixel electrode 191 is connected to switching element Q. Common electrode 270 is disposed on the entire surface of the upper panel 200 and supplied with a common voltage Vcom which is a DC voltage having a predetermined value. Unlike FIG. 2, common electrode 270 may be disposed on the lower panel 100, and in this case, at least one of the two electrodes 191 and 270 may be formed in a shape of a line or bar.

Storage capacitor Cst, serves as an auxiliary capacitor to liquid crystal capacitor Clc and is constructed by overlapping of pixel electrode 191 and storage electrode lines $S_i$ with an insulator between them.

In order to implement color display, each of the pixels uniquely displays one of the primary colors (spatial division), or each of the pixels alternately displays the primary colors in turn (temporal division). A desired color can be obtained by the spatial or temporal combination of the primary colors. An example of the primary colors is the three primary colors of red, green, and blue. FIG. 2 is an example of spatial division in which each of the pixels PX includes a color filter 230 representing one of the primary colors. Unlike FIG. 2, color filter 230 may be provided above or below pixel electrode 191 of the lower panel 100. At least one polarizer (not shown) for polarizing light is attached on an outer surface of the liquid crystal panel assembly 300.

Referring to FIG. 1, gray voltage generator 800 generates either a full number of gate voltages or a limited number of gray voltages (referred to as "reference gray voltages" hereinafter) related to the transmittance of the pixels PX. Some of the (reference) gray voltages have a positive polarity relative to the common voltage Vcom, while the other of the (reference) gray voltages have a negative polarity relative to the common voltage Vcom.

Gate driver 400 synthesizes a gate-on voltage Von and a gate-off voltage Voff to generate the gate signals for application to the gate lines $G_1$-$G_n$ and $G_d$. Gate driver 400 is integrated into the liquid crystal panel assembly 300 along with the signal lines $G_1$-$G_n$, $G_d$, $D_1$-$D_m$, and $S_1$-$S_n$ and the switching elements Q. However, gate driver 400 may include at least one integrated circuit (IC) chip mounted on the LC panel assembly 300 or on a flexible printed circuit (FPC) film in a tape carrier package (TCP) type, which are attached to the panel assembly 300. Alternatively, gate driver 400 may be mounted on a separate printed circuit board (not shown).

Storage signal generator 700 is connected to storage electrode lines $S_1$-$S_n$ and gate lines $G_1$-$G_n$, and applies storage signals having a high level voltage and a low level voltage.

Instead of storage signal generator 700 being supplied with a signal from the additional gate line $G_d$ connected to gate driver 400, storage signal generator 700 may be supplied with a signal from a separate unit such as signal controller 600 or a separate signal generator (not shown). In this case, the additional gate line $G_d$ is not necessarily formed on the liquid crystal panel assembly 300.

Storage signal generator 700 is integrated into the liquid crystal panel assembly 300 along with the signal lines $G_1$-$G_n$, $G_d$, $D_1$-$D_m$, and $S_1$-$S_n$ and switching elements Q, but gate driver 400 may include at least one integrated circuit (IC) chip mounted on the LC panel assembly 300 or on a flexible printed circuit (FPC) film in a tape carrier package (TCP) type which are attached to the panel assembly 300. Alternatively, gate driver 400 may be mounted on a separate printed circuit board (not shown).

Signal controller 600 controls gate driver 400, data driver 500, and storage signal generator 700. Each of units 500, 600, and 800 may include at least one integrated circuit (IC) chip mounted on the LC panel assembly 300 or on a flexible printed circuit (FPC) film in a tape carrier package (TCP) type, which are attached to the panel assembly 300. Alternately, at least one of the units 500, 600, and 800 may be integrated into the panel assembly 300 along with the signal lines $G_1$-$G_n$ and $D_1$-$D_m$ and the switching elements Q. Alternatively, all the units 500, 600, and 800 may be integrated into a single IC chip, but at least one of the units 500, 600, and 800 or at least one circuit element in at least one of the units 500, 600, and 800 may be disposed out of the single IC chip.

Now, the operation of the liquid crystal display will be described in detail. Signal controller 600 receives input image signals R, G, and B and input control signals from an external graphics controller (not shown). The input image signals R, G, and B contain luminance information of pixels PX. The luminance has a predetermined number of gray levels, for example 1024 ($=2^{10}$), 256 ($=2^8$), or 64 ($=2^6$) grays. The input control signals include a vertical synchronization signal Vsync, a horizontal synchronization signal Hsync, a main clock signal MCLK, and a data enable signal DE.

Signal controller 600 processes the image signals R, G, and B according to the operating requirements of the liquid display panel assembly 300 based on the input control signals and the input image signals R, G, and B to generate gate control signals CONT1, data control signals CONT2, and storage control signals CONT3, and then transmits the gate control signals CONT1 to the gate driver 400, the data control signals CONT2 and the processed image signals DAT to the data driver 500, and the storage control signals CONT3 to the storage signal generator 700.

Gate control signals CONT1 include a scanning start signal STV for indicating scanning start, and at least one clock signal for controlling an output period of the gate-on voltage Von. Gate control signals CONT1 may also include an output enable signal OE for defining the duration of the gate-on voltage Von.

Data control signals CONT2 include a horizontal synchronization start signal STH for indicating data transmission for a row of pixels PX, a load signal LOAD for commanding to apply data voltages to the data lines $D_1$ to $D_m$, and a data clock signal HCLK. Data control signals CONT2 may further include an inversion signal RVS for inverting a polarity of the data voltages with respect to the common voltage Vcom.

In response to the data control signals CONT2 from signal controller 600, data driver 500 receives a packet of the digital image signals DAT for a row of the pixels PX, converts the digital image signals DAT to analog data voltages selected from the gray voltages, and applies the analog data voltages to data lines $D_1$ to $D_m$.

Gate driver 400 applies the gate-on voltage Von to a corresponding one of the normal gate lines $G_1$-$G_n$, for example an i-th normal gate line $G_i$, in response to the gate control signals CONT1 from the signal controller 600, and turns on the switching elements Q that are connected to the normal gate line $G_i$ (except the additional gate line $G_d$ that is not connected to the switching elements Q). The data voltages applied to the data lines $D_1$-$D_m$ are then supplied to the pixels PX of the i-th row through the activated switching transistors Q such that the liquid crystal capacitor Clc and storage capacitor Cst in the pixels PX are charged.

The difference between the magnitude of a data voltage and the common voltage Vcom applied to a pixel PX is represented as a voltage across the liquid crystal capacitor Clc of the pixel PX, which is referred to as a pixel voltage. The liquid crystal molecules in the liquid crystal capacitor Clc have orientations depending on the magnitude of the pixel voltage, and the molecular orientations determine the polarization of light passing through the liquid crystal layer 3. The polarizer(s) converts light polarization to light transmittance such that the pixel PX has a luminance represented by a gray of the data voltage.

With the elapse of a horizontal period (also referred to as "1 H" and is equal to one period of the horizontal synchronization signal Hsync and the data enable signal DE), data driver 500 applies data voltages to pixels PX of the (i+1)-th row, and then gate driver 400 changes the gate signal applied to the i-th normal gate line $G_i$ to a gate-off voltage Voff and changes the gate signal applied to the next normal gate line $G_{i+1}$ to a gate-on voltage Von.

Then the switching elements Q of the i-th row are turned off such that pixel electrodes 191 are in a floating state.

Storage signal generator 700 changes the voltage level of a storage signal applied to a corresponding storage electrode line based on the storage control signals CONT3 of the signal controller 600 and the voltage variation of the gate signal applied to a corresponding gate line. Thereby, the voltage of pixel electrode 191 is varied in accordance with the voltage variation of the storage electrode line. By repeating this procedure for all pixel rows, the liquid crystal display displays an image for a frame.

When the next frame starts after one frame finishes, the inversion signal RVS applied to the data driver 500 is controlled such that the polarity of the data voltages is reversed (which is referred to as "frame inversion"). In addition, the polarity of the data voltages applied to pixels PX of a row is substantially the same while the polarity of the data voltages applied to pixels PX of the two adjacent rows is reversed (for example, row inversion).

Since the liquid crystal display according to an exemplary embodiment of the present invention performs frame inversion and row inversion, the polarity of all data voltages applied to pixels PX of one row is positive or negative and is changed every frame. At this time, the storage signal applied to a storage electrode line $S_1$-$S_n$ is changed from a low to a high level voltage when pixel electrode 191 is charged by a positive polarity of data voltage. On the other hand, the storage signal is changed from a high to a low level voltage when pixel electrode 191 is charged by a negative polarity of data voltage. As a result, the voltage of pixel electrode 191 is increased more when pixel electrode 191 is charged by a data voltage of positive polarity and is decreased more when pixel electrode 191 is charged by a data voltage of negative polarity. Thereby, the voltage range of pixel electrode 191 is wider than the range of the gray voltages that are the basis of data voltages such that the luminance range using a low basic voltage is increased.

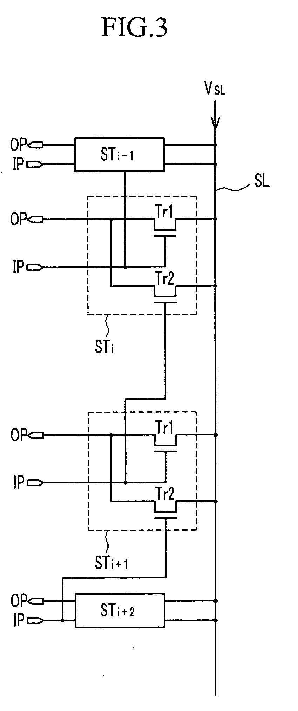

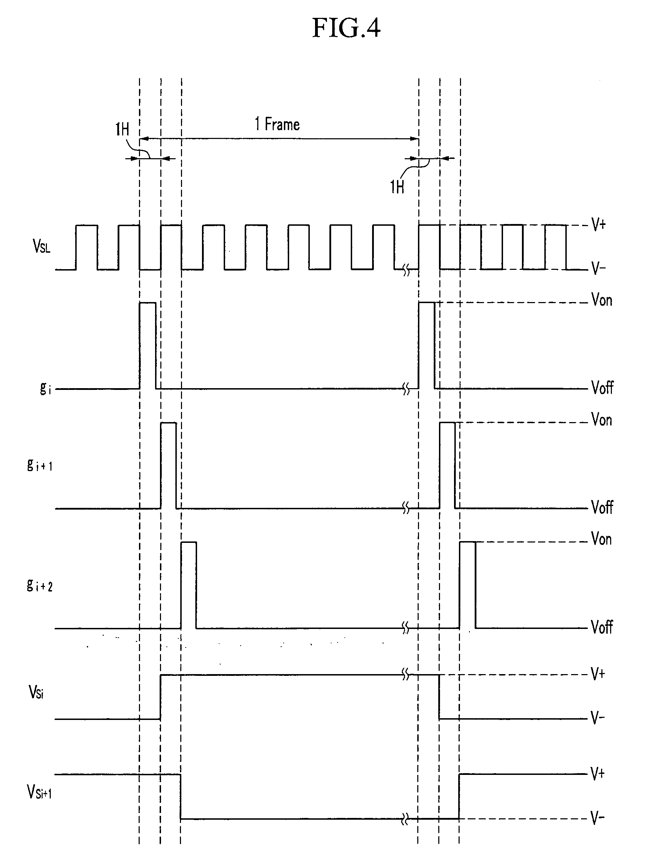

Storage signal generator 700 may include a plurality of signal generating circuits connected to the storage electrode lines $S_1$-$S_n$, respectively. An example of the signal generating circuits is described with reference to FIGs. 3 and 4.

FIG. 3 is a circuit diagram of a signal generating circuit according to an exemplary embodiment of the present invention, and FIG. 4 shows timing diagram signals used in a liquid crystal display including the signal generating circuit shown in FIG. 3.

Referring to FIG. 3, a signal generating circuit induces an input terminal IP and an output terminal OP. In an i-th signal generating circuit STi, the input terminal IP is connected to an i-th gate line $G_i$ to be supplied with an i-th gate signal $g_i$ (hereinafter referred to as "an input signal"), and the output terminal OP is connected to an i-th storage electrode line $S_i$ to output an i-th storage signal $V_{Si}$. Similarly, in an (i+1)-th signal generating circuit, the input terminal IP is connected to an (i+2)-th gate line $G_{i+2}$ to be supplied with an (i+2)-th gate signal $g_{i+2}$ as an input signal, and the output terminal OP is connected to an (i+1)-th storage electrode line $S_{i+1}$ to output an (i+1)-th storage signal $V_{Si+1}$.

The signal generating circuit is supplied with a driving signal $V_{SL}$ of the storage control signals CONT3 from signal controller 600.

As shown in FIG. 4, the driving signal $V_{SL}$ has a low level voltage V- and a high level voltage V+. The period of the driving signal $V_{SL}$ may be about 2H, and the duty ratio thereof may be about 50%. Further, the driving signal $V_{SL}$ is reversed every frame. The driving signal $V_{SL}$ may have a high level voltage V+ of about 5V and a low level voltage V- of about 0V.

As shown in FIG. 3, the signal generating circuit includes two transistors Tr1 and Tr2, each of which has a control terminal, an input terminal, and an output terminal. Transistors Tr1 and Tr2 may be amorphous silicon transistors or polycrystalline silicon thin film transistors.

The control terminal of transistor Tr1 of each of the signal generating circuits is connected to an input terminal IP and to the control terminal of transistor Tr2 of the immediately preceding signal generating circuit. The input terminals of transistor Tr1 and Tr2 are connected to line SL to receive signals Vsl. The output terminals of transistors Tr1 and Tr2 are connected to the output terminals OP.

The additional gate line $G_d$ (FIG. 1) transmits a gate signal to the last signal generating circuit connected to the last storage electrode line $S_n$, but this may be varied. Alternatively, the last signal generating circuit may be supplied with a control signal from a separate unit such as the signal controller 600 or an external device.

The signal generating circuits have the same construction except for input signals. The operation of the i-th and (i+1)-th signal generating circuits $ST_i$ and $ST_{i+1}$ that apply storage signals $V_{Si}$ and $V_{Si+1}$ to i-th and (i+1)-th storage electrode lines $S_i$ and $S_{i+1}$, respectively, will be described with reference to FIG. 3. The liquid crystal display according to the present invention performs one row inversion and frame inversion.

When an input signal, that is, a gate-on voltage Von is applied to the input terminal IP of an i-th gate line $G_i$, transistor Tr1 of the i-th signal generating circuit $ST_i$ is turned-on. At this time, the driving signal $V_{SL}$ has a low voltage level V-. The low level voltage V- of the driving signal $V_{SL}$ is applied to the output terminal OP, and thereby the storage signal $V_{Si}$ has the low level voltage V-.

After about 1H, the gate signal $g_i$ is changed from the gate-on voltage Von to a gate-off voltage Voff, and the gate signal $g_{i+1}$ applied to the (i+1)-th gate line $G_{i+1}$ has the gate-on voltage Von. At this time, the driving signal $V_{SL}$ is changed from the low level voltage V- to a high level voltage V+. Thereby, in the i-th signal generating circuit $ST_i$ the transistor Tr1 is turned off, but the transistor Tr2 is turned on, such that the driving signal $V_{SL}$ of the high level voltage V+ is applied to the output terminal OP through the turned-on transistor Tr2. That is, after finishing the charging of a pixel row by the application of the gate-on voltage Von to the gate line $G_i$, the storage signal $V_{Si}$ is changed from the low level voltage V- to the high level voltage V+.

Further, transistor Tr1 of the (i+1)-th signal generating circuit $ST_{i+1}$ is turned-on, such that the high voltage V+ of the driving signal $V_{SL}$ is applied to output terminal OP as storage signal $V_{Si+1}$.

After about 1H, the gate signal $g_{i+1}$ has the gate-off voltage Voff and a gate signal $g_{i+2}$ applied to the (i+2)-th gate line $G_{i+2}$ has the gate-on voltage Von. Thereby, transistor Tr1 is tumed-off, but transistor Tr2 of the (i+1)-th signal generating circuit $ST_{i+1}$ is turned on, such that the storage signal $V_{Si+1}$ is changed from the high level voltage V+ to the low level voltage V-.

Next, the change of the pixel electrode voltage Vp caused by voltage variation of the storage signal is illustrated. Hereinafter, each of the capacitors and the capacitance thereof are denoted as the same reference characters.

Firstly, the pixel electrode voltage Vp is obtained by Equation 1. In Equation 1, Clc and Cst represent a liquid crystal capacitor and a storage capacitor and the capacitance thereof, respectively, V+ represents a high level and V- represents a low level voltage of a storage signal Vs.

As shown in Equation 1, the pixel electrode voltage Vp is defined by adding or subtracting a variation amount Δ, which is defined by the capacitances Clc and Cst of the liquid crystal capacitor and the storage capacitor and the voltage variation of the storage signal Vs, from the data voltage $V_D$.

[Equation 1]

$$Vp = V_D \pm \Delta = V_D \pm \frac{C_{st}}{C_{st} + C_{lc}}( V+ - V-)$$

The pixel is designed so that the data voltage $V_D$ is in a range of from about 0V to about 5V, and the Cst and Clc are equal to each other. When V+ - V- = 5V, $Vp = V_D \pm 2.5$ in Equation 1.

As a result, when the voltage of the storage signal Vs is changed, the pixel electrode voltage Vp increases or decreases by about $\pm 2.5$V from the data voltage $V_D$ applied thorough the associated data line among the data lines $D_1$ to $D_m$ according to the polarity of the data voltage $V_D$. Namely, when the polarity is positive the pixel electrode voltage Vp increases by about +2.5V, and when the polarity is negative the pixel electrode voltage VP decreases by about -2.5V. Due to the change in the pixel electrode voltage Vp, the range of the pixel voltage is also widened. For example, when the common voltage Vcom is fixed to about 2.5V, the pixel voltage is in a range of from about -2.5V to about +2.5V due to the data voltage $V_D$ ranging from about 0V to about 5V applied to the pixel voltage. However, when the storage signal Vs is changed from the high level voltage V+ to the low level voltage V-, the range of the pixel voltage is widened such as to a range of about -5V to about +5V.

In this manner, the range of the pixel voltage is widened by a value of as much as the variation amount Δ of the pixel electrode voltage Vp caused from the change V+- V- in the storage signal. Therefore, the range of the voltage for representing the grayscale is widened, so that the luminance can be improved.

In addition, since the common voltage is fixed at a constant voltage, power consumption is reduced in comparison with a case where the high and lower voltages are alternately applied. Namely, when the common voltage applied to the common electrode is about 0V or 5V, the voltage applied to a parasitic capacitor formed between the data line and the common electrode has a maximum of about $\pm 5$V. However, when the common voltage is fixed to be about 2.5V, the voltage applied to the parasitic capacitor formed between the data line and the common electrode is reduced to a maximum of about $\pm 25V$. Since the power consumption in the parasitic capacitor formed between the data line and the common electrode is reduced, total power consumption in the liquid crystal display is also reduced.

However, since the response speed of the liquid crystal is low, the liquid crystal molecules do not rapidly respond to the pixel voltage. Therefore, the electrostatic capacitance of the liquid crystal capacitor Clc depends on the pixel voltage across the liquid crystal capacitor Clc and varies with whether or not the liquid crystal molecules reach the re-aligned and stabilized state. As a result, the pixel electrode voltage Vp varies with whether or not the liquid crystal molecules reach a stabilized state.

Next, the change in the pixel electrode voltage Vp according to whether or not the liquid crystal molecules reach a stabilized state is described.

The electrostatic capacitance of the liquid crystal capacitor Clc, after a maximum pixel voltage is applied to the liquid crystal capacitor Clc and the liquid crystal molecules reach the stabilized state, is assumed to be three times the electrostatic capacitance of the liquid crystal capacitor Clc after a minimum pixel voltage is applied and the liquid crystal molecules reach the stabilized state. The maximum pixel voltage is the maximum grayscale (white grayscale in the normally black type) pixel voltage. The minimum pixel voltage is the minimum grayscale (black grayscale in the normally black type) pixel voltage. In addition, it is assumed that V+-V-=5V and Clc=Cst.

The pixel electrode voltage Vp after the maximum grayscale pixel voltage is applied to the liquid crystal capacitor Clc when the liquid crystal molecules reach the stabilized state is represented by Equation 1. Since V+- V-= about 5V and Clc=Cst, the pixel electrode voltage $V_P$ is $V_P = V_D \pm 2.5$.

However, in a case where after the maximum grayscale pixel voltage is applied to the liquid crystal capacitor Clc, the liquid crystal molecules do not reach the stabilized state, the pixel electrode voltage Vp is represented by Equation 2.

[Equation 2]

$$Vp = V_D \pm \Delta = V_D \pm \frac{C_{st}}{C_{st+C_{lc}}} ( V+ - V-)$$

$$= V_D \pm \frac{C_{st}}{C_{st} + \frac{1}{3} C_{st}} ( V+ - V-) = V_D \pm \frac{3}{4} ( V+ - V-)$$

Since

$$V+ - V- = 5V \quad V_p = V_D \pm 3.75$$

In a case where after the maximum grayscale pixel voltage is applied to the liquid crystal capacitor Clc, the liquid crystal molecules do not reach the stabilized state, and the pixel electrode voltage Vp is sustained in the pixel electrode voltage after the minimum grayscale pixel voltage is applied to the liquid crystal capacitor Clc when the liquid crystal molecules reach the stabilized state. Namely, the pixel electrode voltage Vp is sustained in the last frame state. Therefore, the variation amount $\Delta$ of the pixel electrode voltage Vp caused by the change V+ - V- of the storage signal increases from about $\pm 2.5V$ to about $\pm 3.75V$.

In the case of changing from the pixel electrode voltage of the minimum gray to the pixel electrode voltage of another gray, the variation amount $\Delta$ of the pixel electrode voltage Vp caused from the change V+- V- of the storage signal further increases until the liquid crystal molecules reach the stabilized state. When V+- V-= about 5V, the variation amount $\Delta$ increases to a maximum of about $\pm 3.75V$.

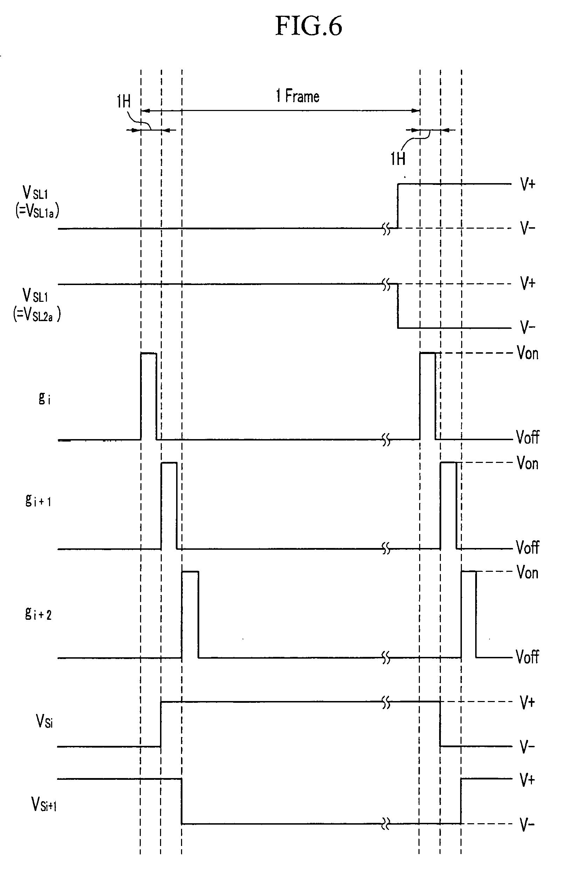

Therefore, conventionally, as shown in FIG. 6, although the pixel electrode voltage Vp corresponding to the target pixel electrode voltage $V_T$ is applied to the pixel electrode in all the frames, the pixel electrode voltage charged in the pixel electrode is reduced due to the influence of the adjacent data voltage after the completion of the charging operation so as to not reach the target pixel electrode voltage $V_T$ in one frame, so that the pixel electrode voltage Vp can reach the target pixel electrode voltage $V_T$ after several frames.

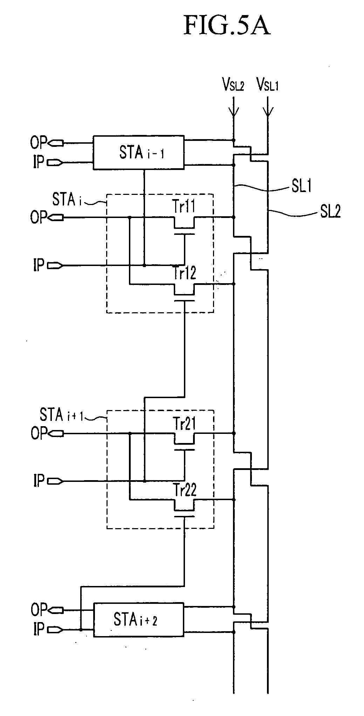

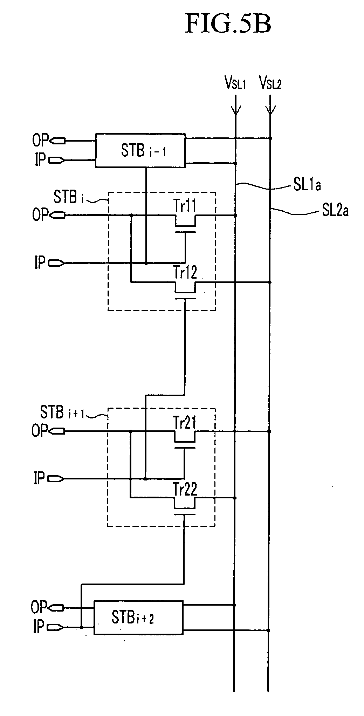

However, according to the exemplary embodiment of the invention, as shown in FIG. 5, since the pixel electrode voltage Vp applied to the pixel electrode is higher than the target pixel electrode voltage $V_T$, the pixel electrode can reach the target pixel electrode voltage $V_T$ in one frame. As a result, in comparison with the prior art, the response speed RC of the liquid crystal can be improved.

Accordingly, by adding the voltage variation of the storage signal Vs to or subtracting it from a data voltage Vo, the pixel electrode voltage Vp increases by the voltage variation when a pixel has been charged with a data voltage of a positive polarity, and, on the contrary, the pixel electrode voltage Vp decreases by the voltage variation when a pixel has been charged with a data voltage of a negative polarity. Thereby, the variation of a pixel voltage becomes wider than the range of a gray voltage by the increased or decreased pixel electrode voltage Vp such that the range of the represented luminance also increases.

Further, since a common voltage is fixed at a predetermined value, the power consumption is reduced as compared with a common voltage of a high value and a low value alternates.

Next, another examples of the signal generating circuits according to the exemplary embodiment of the present invention will be describe with reference to FIGs. 5A, 5B, and FIG. 6.

As compared with FIG. 3, elements performing the same operations are indicated by the same reference numerals, and the detailed description thereof is omitted.

FIGs. 5A and 5B are circuit diagrams of further examples of a signal generating circuit according to an exemplary embodiment of the present invention, and FIG. 6 is a timing diagram of signals used in the liquid crystal display including the signal generating circuit shown in FIGs. 5A or 5B.

Like the signal generating circuits shown in FIG. 3, each of the signal generating circuits shown in FIGs. 5A and 5B includes two transistors Tr11 and Tr12, or Tr21 and Tr22, each of which has a control signal, an input terminal, and an output terminal.

However, unlike FIG. 3, the signal generating circuits shown in FIGs. 5A and 5B are supplied with two driving signals $V_{SL1}$ and $V_{SL2}$ of the storage control signals CONT3 through two conductors SL1 and SL2, or SL1a and SL2a. The driving signals $V_{SL1}$ and $V_{SL2}$ have a low level voltage V+ and a high level voltage V+, respectively. The driving signals $V_{SL1}$ and $V_{SL2}$ have a phase difference of about 180°, and thereby are a reversed waveform with respect to each other. The waveforms of the driving signals $V_{SL1}$ and $V_{SL2}$ are reversed every frame. At this time, the waveforms of the driving signals $V_{SL1}$ and $V_{SL2}$ may be reversed in the blank section between two adjacent frames. The low level voltage V- of the driving signals $V_{SL1}$ and $V_{SL2}$ may be about 0V, and the high level voltage V+ of the driving signals $V_{SL1}$ and $V_{SL2}$ may be about 5V,

Thereby, as compared with FIG. 3, the signal generating circuits shown in FIGs. 5A and 5B have the different connection between input terminals of the two transistors Tr11 and Tr12, or Tr21 and Tr22 and the driving signals $V_{SL1}$ and $V_{SL2}$.

In detail, the conductors SL1 and SL2 of FIG. 5A alternate every row such that left and right positions are changed every row.

Thereby, the input terminals of the transistors Tr11, Tr21, Tr12, and Tr22 are connected to immediately adjacent conductors SL1 and LS2, but the input driving voltages $V_{SL1}$ and $V_{LS2}$ are changed every row. For example; when the input terminals of the transistors of the odd signal generating circuits are connected to the driving signal $V_{SL1}$, the input terminals of the transistors of the even signal generating circuits are connected to the driving signal $V_{SL2}$. On the contrary, when the input terminals of the transistors of the odd signal generating circuits are connected to the driving signal $V_{SL2}$, the input terminals of the transistors of the even signal generating circuits are connected to the driving signal Vsu.

Unlike FIG. 5A, the conductors SL1a and SL2a of the signal generating circuits shown FIG. 5B extend in parallel in a longitudinal direction, and the driving signal $V_{SL1}$ and $V_{SL2}$ inputted to the input terminals of the transistors Tr11, Tr12, Tr21, and Tr22 are changed every row due to the changing of the connections between the transistors Tr11, Tr21, Tr12, and Tr22 and the conductors SL1a and SL2a. For example, when the input terminals of the odd signal generating circuits are connected to the immediately adjacent conductor SL1a to be supplied with the driving signal $V_{SL1}$, the input terminals of the even signal generating circuits are connected to the next adjacent conductor SL2a to be supplied with the driving signal $V_{SL2}$. On the contrary, when the input terminals of the odd signal generating circuits are connected to the next adjacent conductor SL1b to be supplied with the driving signal $V_{SL1}$, the input terminals of the even signal generating circuits are connected to the immediately adjacent conductor SL1a to be supplied with the driving signal $V_{SL1}$.

Operations of the signal generating circuits shown in FIGs. 5A and 5B are the same, and operations of the i-th and (i+1)-th signal generating circuits $STA_i$, $STA_{i+1}$, $STB_i$, and $STB_{i+1}$ will be described with reference to FIG. 6.

The operations of the i-th and (i+1)-th signal generating circuits $STA_i$, $STA_{i+1}$, $STB_i$, and $STB_{i+1}$ are similar to those of FIG. 3.

That is, when a gate signal $g_i$ applied to an i-th gate line $G_i$ becomes a gate-on voltage Von, the transistor Tr11 is turned on. At this time, the driving signal $V_{SL1}$ has a low level voltage V- and the driving signal $V_{SL2}$ has a high level voltage V+. Thereby, the driving signal $V_{SL1}$ of the low level signal V-is applied to the output terminal OP as a storage signal $V_{Si}$ through the tumed-on transistor Tr11.

After about 1H, the gate signal $g_i$ is changed from the gate-on voltage Von to a gate-off voltage Voff, and a gate signal $g_{i+1}$ applied to the (i+1)-th gate line $G_{i+1}$ has the gate-on voltage Von. Thereby, the transistor Tr11 is turned off and the transistor Tr12 is turned on, such that the driving signal $V_{SL2}$ of the high level signal V+ is applied to the output terminal OP as a storage signal $V_{Si}$ through the tumed-on transistor Tr12. That is, after the charging of a pixel row connected to the gate line $G_i$ by the application of the gate-on voltage Von, the storage signal $V_{Si}$ is changed from the low level voltage V- to the high level voltage V+, and thereby the pixel electrode voltage Vp increases by the variation amount $\Delta$ defined by Equation 1 or 2.

At this time, transistor Tr21 of the (i+1)-th signal generating circuit, $STA_{i+1}$, or $STB_{i+1}$ are turned on, the driving signal $V_{SL2}$ of the high level voltage V+ is applied to the output terminal OP to output an (i+1)-th storage signal $V_{Si+1}$.

After about 1H, the gate signal $g_{i+1}$ is changed from the gate-on voltage Von to a gate-off voltage Voff, and a gate signal $g_{i+2}$ applied to the (i+2)-th gate line $G_{i+2}$ has the gate-on voltage Von. Thereby, transistor Tr21 is turned off and transistor Tr22 is turned on, such that the driving signal $V_{SL2}$ of the low level signal V- is applied to the output terminal OP as a storage signal $V_{Si+1}$.

After the charging of a pixel row connected to the gate line $G_{i+1}$ by the application of the gate-on voltage Von, the storage signal $V_{Si+1}$ is changed from the high level voltage V+ to the low level voltage V-, and thereby the pixel electrode voltage Vp decreases by the variation amount $\Delta$ defined by Equation 1 or 2.

The driving signal $V_{SL}$ of FIGs. 3 and 4 is inverted by about 1 H, but the driving signals $V_{SL1}$ and $V_{SL2}$ are inverted every frame. Thereby the stable application of the driving signals $V_{SL1}$ and $V_{SL2}$ is possible and the power consumption is reduced, as compared with the signal generating circuits show in FIG. 3.

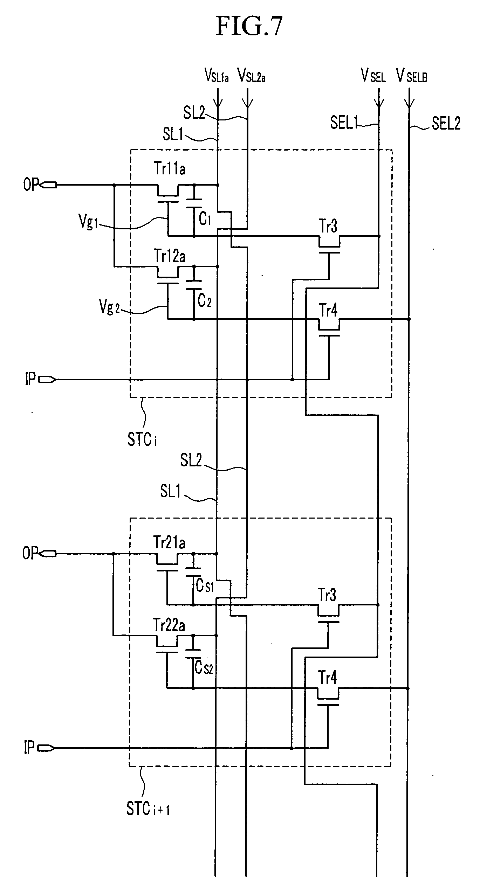

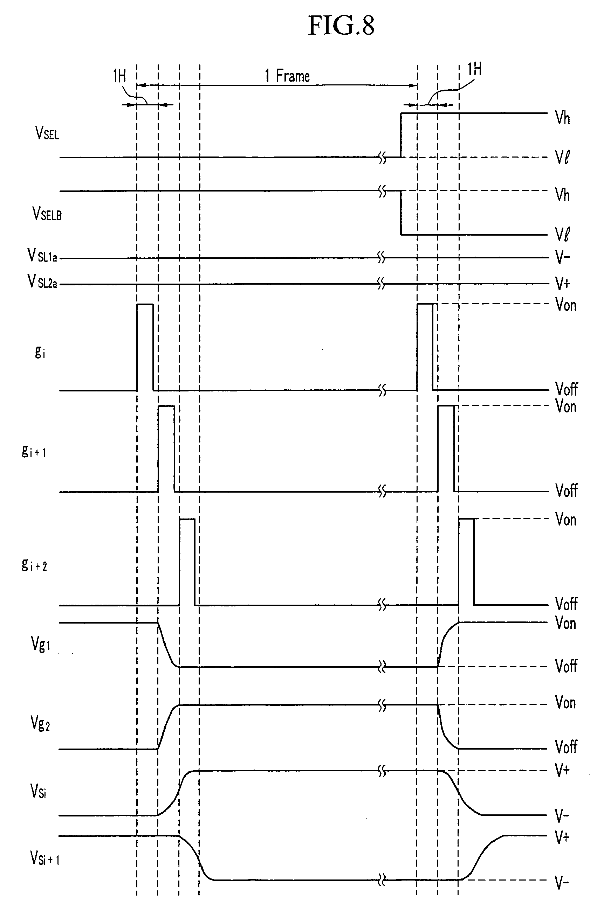

Next, a further example of signal generating circuits according to the embodiment of the present invention will be described with reference to FIGs. 7 and 8.

FIG. 7 is a circuit diagram of the further example of a signal generating circuit according to another exemplary embodiment of the present invention, and FIG. 8 is a timing diagram of signals used in the liquid crystal display including the signal generating circuit shown in FIG. 7.

Each of signal generating circuits shown in FIG. 7 includes an input terminal IP and an output terminal OP. However, differently from the signal generating circuit shown in FIG. 5A, for example in an i-th signal generating circuit $73_i$, the input terminal IP is supplied with an (i+1)-th gate signal $g_{i+1}$ applied to the (i+1)-th gate line $G_{i+1}$ as an input signal, and the output terminal outputs an i-th storage signal $V_{Si}$ connected to an i-th storage electrode line $S_i$. Similarly, the input terminal IP is supplied with an (i+2)-th gate signal $g_{i+2}$ applied to the (i+2)-th gate line $G_{i+2}$ as an input signal, and the output terminal outputs an (i+1)-th storage signal $V_{Si+1}$ connected to an (i+1)-th storage electrode line $S_{i+1}$.

Further, the signal generating circuits are supplied with driving signals $V_{SL1a}$ and $V_{SL2a}$ and selection signals $V_{SEL}$ and $V_{SELB}$ of the storage control signals CONT3 of the controller 600 through the conductors SL1, SL2, SEL1, and SEL2, respectively.

As in FIG. 5A, the conductors SL1 and SL2 alternate every row, and thereby the left and right positions are changed. However, the conductors SL1 and SL2 may be formed as in FIG. 5B to transmit the driving signals $V_{SL1a}$ and $V_{SL2a}$.

The conductor SEL1 extends in the longitudinal direction, is projected to a left direction to enclose the transistors Tr4, and then again extends in the longitudinal direction. However the conductor SEL1 may extend in the longitudinal direction without the projections in parallel with the conductor SEL2.

As shown in FIG. 8, the driving signals $V_{SL1a}$ and $V_{SL2a}$ have constant DC voltages. For example, the driving signal $V_{SL1a}$ maintains a low level voltage V- such as about 0V, and the driving signal $V_{SL2a}$ maintains a high level voltage V+ such as about 5V. The selection signals have a low level voltages Vl and a high level voltage Vh, and the low level voltage Vl may be the same as the gate-off voltage Voff. The high level voltage Vh may be the same as the gate-on voltage Von. The selection signals $V_{SEL}$ and $V_{SELB}$ have a phase difference of about 180° to be inverted with respect to each other, and the waveforms of the selection signals $V_{SEL}$ and $V_{SELB}$ are inverted every frame. At this time, the waveforms of the selection signals $V_{SEL}$ and $V_{SELB}$ may be reversed in the blank section between two adjacent frames.

Each of the signal generating circuits includes four transistors Tr11a and Tr12a, or Tr21a and Tr22a, Tr3, and Tr4, and two capacitors C1 and C2.

As shown in FIG. 7, like in FIGs. 5A and 5B, the transistor Tr11a has an input terminal and an output terminal connected to the driving signal $V_{SL1a}$ and the output terminal OP, respectively, and the transistor Tr12a has an input terminal and an output terminal connected to the driving signal $V_{SL2a}$ and the output terminal OP, respectively. The transistor Tr21a has an input terminal and an output terminal connected to driving signal $V_{SL2a}$ and the output signal OP, respectively, and the transistor Tr22a has an input terminal and an output terminal connected to the driving signal $V_{SL1a}$ and the output terminal OP, respectively. However, unlike in FIGs. 5A and 5B, control terminals of the transistors Tr11a and Tr21a are connected to an output terminal of the transistor Tr3, and control terminals of the transistors Tr12a and Tr22a are connected to an output terminal of the transistor Tr4. As described above, when the odd signal generating circuits include the transistors Tr11a and Tr12a, the even signal generating circuits include the transistors Tr21a and Tr22a. Conversely, when the odd signal generating circuits indude the transistors Tr21a and Tr22a, the even signal generating circuits indude the transistors Tr11 a and Tr12a.

The transistors Tr3 and Tr4 also have input terminals connected to the selection signal $V_{SEL}$, $V_{SELB}$, respectively, and control terminals connected to the input terminal IP.

The transistors Tr11a, Tr12a, Tr21 a, and Tr22a may be amorphous silicon transistors or polycrystalline silicon thin film transistors.

Operation of the signal generating circuits will be described with reference to FIG. 8.

The construction of the signal generating circuits connected to the storage electrode lines S1-Sn, respectively, are the same except for the input signal and the driving voltages $V_{SL1a}$ and $V_{SL2a}$, and thereby operations of the i-th and (i+1)-th signal generating circuits $73_i$ and $73_{i+1}$ will be described.

First, when a gate-on voltage Von of an (i+1)-th gate signal $g_{i+1}$ is applied to the input terminal IP of the i-th signal generating circuit $73_i$, the transistors Tr3 and Tr4 are turned on.

Thereby, as shown in FIG. 8, a low level voltage Vl of the selection signal $V_{SEL}$ is applied to the control terminal of the transistor Tr11a as a gate driving signal Vg1 and makes the capacitor C1 charge. In addition, a high level voltage Vh of the selection signal $V_{SELB}$ is applied to the control terminal of the transistor Tr12a as a gate driving signal Vg2 and makes the capacitor C2 charge. A different voltage between the gate driving voltage Vg1 and the driving voltage $V_{SL1a}$ and a different voltage between the gate driving voltage Vg2 and the driving voltage $V_{SL2a}$ are charged into the capacitors C1 and C2, respectively.

The maximum level voltage Von' and the minimum level voltage Voff' of the gate driving voltages Vg1 and Vg2 are different from the high level voltage Vh and the low level voltage Vl2 of the selection signals $V_{SEL}$ and $V_{SELB}$. That is, the maximum level voltage Von' of the gate driving voltages Vg1 and Vg2 is less than the gate-on voltage Von, and the minimum level voltage Voff' of the gate driving voltages Vg1 and Vg2 is more than the gate-off voltage Voff.

The states of the transistors Tr11a and Tr12a are maintain to the next frame by the charging operations of the capacitors C1 and C2.

Thereby, the driving signal $V_{SL2a}$ of the high level voltage V+ is applied to the output terminal OP as the storage signal $V_{Si}$ via the turned-on transistor Tr12a.

As a result, since the storage signals $V_{Si}$ is changed from the low level voltage V- to the high level voltage V+, the pixel electrode voltage Vp of the corresponding pixel row increases by the variation amount defined by Equation 1 or 2.

Next, operation of the (i+1)-th signal generating circuit $73_{i+1}$ will be described.

When a gate-on voltage Von of an (i+1)-th gate signal $g_{i+1}$ is applied to the (i+1)-th signal generating circuit $73_{i+1}$, the operation of the (i+1)-th signal generating circuit $73_{i+1}$ starts.

That is, when the gate-on voltage Von of an (i+1)-th gate signal $g_{i+1}$ is applied to the input terminal IP, the transistors Tr3 and Tr4 are turned on, and thereby the low level voltage Vl of the selection signal $V_{SEL}$ and the high level voltage Vh of the selection signal $V_{SELB}$ are applied via the turned-on transistors Tr3 and Tr4, respectively, to turn on the transistor Tr21a and to turn on the transistor Tr22a. Thereby, the driving signal $V_{SL1a}$ of the low level voltage V- is outputted to the output terminal OP as a storage signal $V_{Si+1}$, and the states of the transistors Tr21a and Tr22a are maintained to the next frame by the charging operations of the capacitors C1 and C2.

As a result, since the storage signals $V_{Si+1}$ is changed from the high level voltage V+ to the low level voltage V-, the pixel electrode voltage Vp of the corresponding pixel row decreases by the variation amount defined by Equation 1 or 2.

In the example, since a constant voltage is applied as a storage voltage for one frame, voltage variation due to parasitic capacitance is reduced to improve image quality. Since the transistors Tr3 and Tr4 are applied only the voltages having a magnitude for charging the capacitors C1 and C2 and the state of the storage signal is maintained to the next frame, the size of the transistors is reduced.

Alternatively, like the gate-on voltage, the storage signal that is applied through a separate integrated circuit may be sequentially shifted to the first storage electrode line and to the last storage electrode. At this time, the storage signal generator may be a serial-to-parallel shift resistor, and, by connecting an inverter, etc., to the odd or even storage electrode lines, the voltage level of the storage signal may be inverted every row.

Now, the construction of the thin film transistor array panel in the liquid crystal display according to the embodiment of the present invention is described in detail with reference to the accompanying drawings.

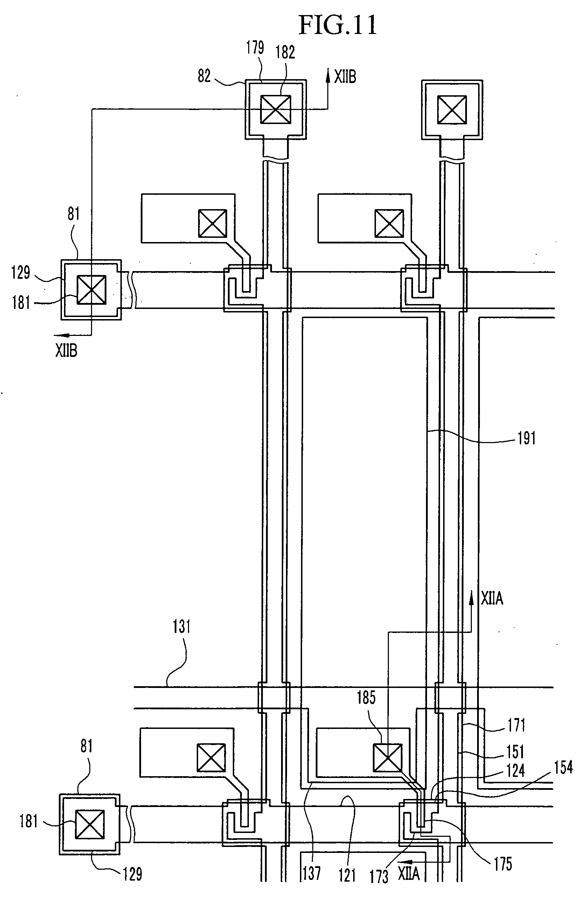

A first example of the thin film transistor array panel in the liquid crystal display according to the embodiments of the present invention is described with reference to FIGs. 11 to 12B.

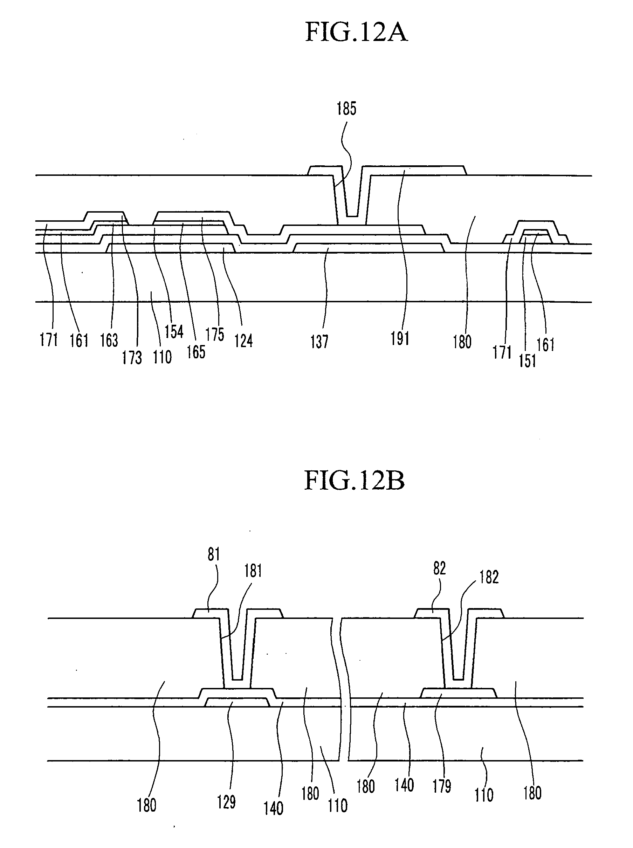

FIG. 11 is a layout view of an example of the thin film transistor array panel in a liquid crystal display according to embodiments of the present invention, and FIGs. 12A and 12B are cross-sectional views of the thin film transistor array panel taken along lines XIIA-XIIA and XIIB-XIIB of FIG. 11, respectively.

A plurality of gate lines 121 and a plurality of storage electrode lines 131 are disposed on an insulating substrate 110 made of transparent glass or plastic.

Gate lines 121 primarily extend in a horizontal direction to transmit the gate signals. Gate lines 121 include a plurality of gate electrode 124 that protrude downwardly, and end portions 129 that have wide surface areas for connection to other layers or an external driving circuit.

A gate driving circuit (not shown) that generates the gate signals may be mounted on a flexible printed circuit film (not shown) attached on substrate 110. Alternatively, the gate driving circuit may be directly mounted on substrate 110, or it may be integrated into substrate 110. In a case where the gate driving circuit is integrated into substrate 110, gate lines 121 may be directly connected to the gate driving circuit.

Each of storage electrode lines 131 primarily extends in the horizontal direction and includes a plurality of enlarged portions 137 of which widths are enlarged downwardly. Each of storage electrode lines 131 may further include end portions that have wide areas for connection to other layers or an external driving circuit. However, the shape and arrangement of storage electrode lines 131 may be modified in various manners.

Each of storage electrode lines 131 is alternately applied with predetermined voltages of the high level voltage V+ of about 5V and the low level voltage V- of about 0V in units of a frame.

A signal generating circuit (not shown) that generates the storage signals may be mounted on a flexible printed circuit film (not shown) attached on substrate 110. Alternatively, the signal generating circuit may be directly mounted on substrate 110, or it may be integrated into substrate 110. In a case where the signal generating circuit is integrated into substrate 110, storage electrode line 131 may extend to be directly connected to the signal generating circuit.

Gate lines 121 and storage electrode lines 131 may be made of an aluminum-containing metal such as aluminum (Al) and an aluminum alloy, a silver-containing metal such as silver (Ag) and a silver alloy, a copper-containing metal such as copper (Cu) and a copper alloy, a molybdenum-containing metal such as molybdenum (Mo) and a molybdenum alloy, chromium (Cr), tantalum (Ta), and titanium (Ti). Alternatively, gate lines 121 and storage electrode lines 131 may have a multi-layered structure including two conductive layers (not shown) having different physical properties. One of the two conductive layers is made of a metal having low resistivity, for example an aluminum-containing metal, a silver-containing metal, and a copper-containing metal, in order to reduce signal delay or voltage drop. The other conductive layer is made of a material having good physical, chemical, and electrical contact characteristics with other materials, particularly with ITO (indium tin oxide) and IZO (indium zinc oxide), such as a molybdenum-containing metal, chromium, titanium, and tantalum. As a preferred example of the combination, a combination of a lower chromium layer and an upper aluminum alloy layer, or a combination of a lower molybdenum alloy layer and an upper aluminum layer may be used. Alternatively, gate lines 121 and storage electrode lines 131 may be made of various metals and conductive materials.

Side surfaces of gate lines 121 and storage electrode lines 131 may be slanted with respect to a surface of substrate 110, and the slanted angle may be in a range of about 30° to about 80°.

A gate insulating layer 140 made of a silicon nitride SiNx, a silicon oxide $SiO_x$, or the like is formed on gate lines 121 and storage electrode lines 131.

A plurality of semiconductor stripes 151 made of hydrogenated amorphous silicon (abbreviated to a-Si) or polysilicon are formed on the gate insulating film 140. The semiconductor stripes 151 primarily extend in the vertical direction, and include a plurality of projections 154 that extend toward the gate electrodes 124. In addition, the widths of the semiconductor stripes 151 are enlarged at regions near gate lines 121 and storage electrode lines 131 to cover wide areas thereof.

A plurality of line-shaped and island-shaped ohmic contacts 161 and 165 are formed on the semiconductor stripes 151. The ohmic contacts 161 and 165 may be made of silicide or n+ hydrogenated amorphous silicon that is heavily doped with n-type impurities such as phosphorus (P). The line-shaped ohmic contacts 161 include a plurality of projections 163. Each pair of a projection 163 and an island-shaped ohmic contact 165 is disposed on a protrusion 154 of a semiconductor stripe 151.

Side surfaces of the semiconductor stripes 151 and the ohmic contacts 161 and 165 are also slanted with respect to the surface of the substrate 100, and the slanted angle may be in a range of about 30° to about 80°.

A plurality of data lines 171 and a plurality of drain electrodes 175 are formed on the ohmic contacts 161 and 165 and the gate insulating film 140.

Data lines 171 that transmit data signals primarily extend in the vertical direction to intersect gate lines 121 and storage electrode lines 131. Data lines 171 include a plurality of source electrodes 173 that protrude toward the gate electrodes 124, and end portions 179 that have wide areas for connection to other layers or external driving circuits. A data driving circuit (not shown) that generates the data signals may be mounted on a flexible printed circuit film (not shown) attached on substrate 110. Alternatively, the data driving circuit may be directly mounted on substrate 110, or it may be integrated into substrate 110. If the data driving circuit is integrated into substrate 110, data lines 171 may extend to be directly connected to the data driving circuit.

Drain electrode 175 is separated from data line 171 and faces a source electrode 173 with the gate electrode 124 interposed therebetween. Each of drain electrodes 175 includes a wide end and a bar-shaped end. The wide end overlaps an enlarged portion of storage electrode line 131, and the bar-shaped end is partially surrounded by the curved source electrode 173.

One gate electrode 124, one source electrode 173, and one drain electrode 175 together with one protrusion 154 of one semiconductor stripe constitute one thin film transistor (TFT). The channel of the thin film transistor is formed in the protrusion 154 between the source electrode 173 and drain electrode 175.

Preferably, data lines 171 and drain electrodes 175 are made of molybdenum (Mo), a refractory metal such as chromium (Cr), tantalum (Ta), and titanium (Ti), or an alloy thereof. Data lines 171 and drain electrodes 175 may have a multi-layered structure including a refectory metal layer (not shown) and a low-resistivity conductive layer (not shown). As an example of the multi-layered structure, there are a double-layered structure of a lower chromium (or molybdenum alloy) layer and an upper aluminum alloy layer, and a triple-layered structure of a lower molybdenum alloy layer, an intermediate aluminum alloy layer, and an upper molybdenum alloy layer. However, instead of the aforementioned materials, data line 171 and drain electrode 175 may be made of various other metals and conductive materials.

Preferably, side surfaces of data lines 171 and drain electrodes 175 may also be slanted with respect to the surface of substrate 110, in a slant angle ranging from about 30° to about 80°.

The ohmic contacts 161 and 165 are interposed only between the underlying semiconductor stripes 151 and the overlying data lines 171 and drain electrodes 175, and have a function of reducing contact resistance therebetween. Although the widths of the semiconductor stripes 151 are smaller than those of data lines 171 in most regions, the widths of the portions where gate lines 121 and the storage electrode lines 121 intersect each other are enlarged as described above. The semiconductor stripes 151 have exposed portions that are not covered by data lines 171 and drain electrodes 175, such as portions disposed between the source electrodes 173 and drain electrodes 175.

A passivation layer 180 is formed on data line 171, drain electrode 175, and the exposed portions of the semiconductor stripes 151. Passivation layer 180 may be made of an inorganic or organic insulating material and have a planarized surface. As an example of the insulating material, there are a silicon nitride and a silicon oxide. The organic insulating material may have photosensitivity, and the dielectric constant thereof is preferably about 4.0 or less. Alternatively, passivation layer 180 may have a double-layered structure of a lower inorganic layer and an upper organic layer in order to sustain an excellent insulating property of the organic layer and protect the exposed portions of the semiconductor stripes 151.

A plurality of contact holes 182 and 185 that expose end portions 179 of data lines 171 and drain electrodes 175, respectively, are formed on passivation layer 180. A plurality of contact holes 181 that expose end portions 129 of gate lines 121 are formed on passivation layer 180 and the gate insulating layer 140.

A plurality of pixel electrodes 191 and a plurality of contact assistants 81 and 82 are formed on passivation layer 180. Pixel electrodes 191 may be made of a transparent conductive material such as ITO and IZO, or a reflective metal such as aluminum, silver, and chromium, or an alloy thereof.

Pixel electrode 191 is physically and electrically connected to drain electrode 175 through the contact hole 185, and receives a data voltage applied by drain electrode 175. Pixel electrode 191 that is supplied with the data voltage together with a common electrode (not shown) that is disposed in the other display panel (not shown) and supplied with a common voltage generates an electric field. The electric field determines alignment of liquid crystal molecules in the liquid crystal layer (not shown) between the two electrodes. The polarization of light passing through the liquid crystal layer varies according to the alignment of the liquid crystal molecules. Pixel electrode 191 and the common electrode constitute a capacitor (hereinafter, referred to as a liquid crystal capacitor) that sustains the applied voltage after the thin film transistor turns off.

A capacitor formed by overlapping pixel electrode 191 and drain electrode 175 that is electrically connected to pixel electrode 191 with storage electrode line 131 is called a storage capacitor which increases voltage storage capacity. Due to the enlarged portion 137 of storage electrode line 131, the overlapping area increases, so that electrostatic capacitance of the storage capacitor increases.

Contact assistants 81 and 82 are connected to the end portions 129 of gate lines 121 and the end portions 179 of data lines 171 through contact holes 181 and 182, respectively. Therefore, contact assistants 81 and 82 have the function of providing adhesion of end portions 129 and 179 of gate and data lines 121 and 171 to the external devices and protecting the end portions 129 and 179.

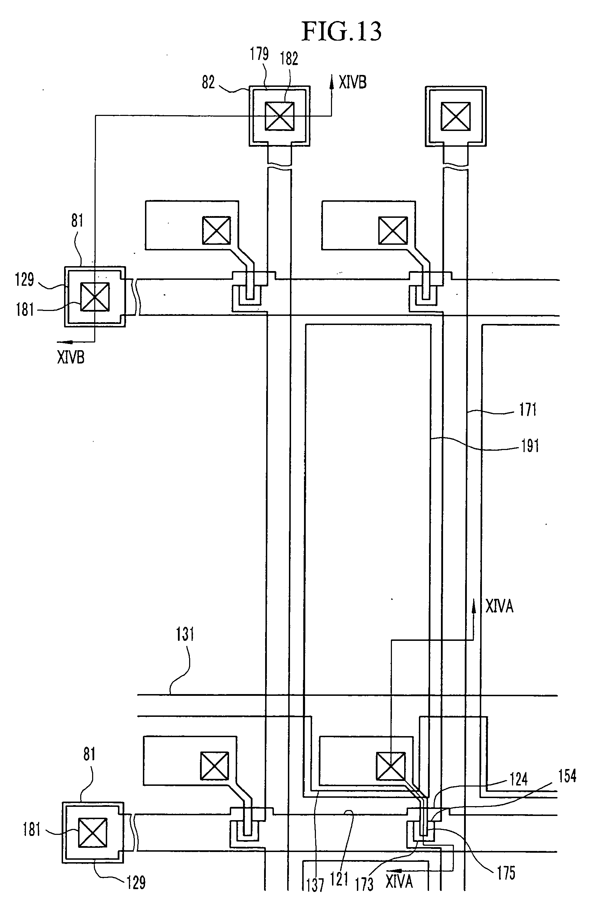

Next, another example of the thin film transistor array panel in the liquid crystal display according to the embodiments of the present invention is described with reference to FIGs. 13 to 14B.

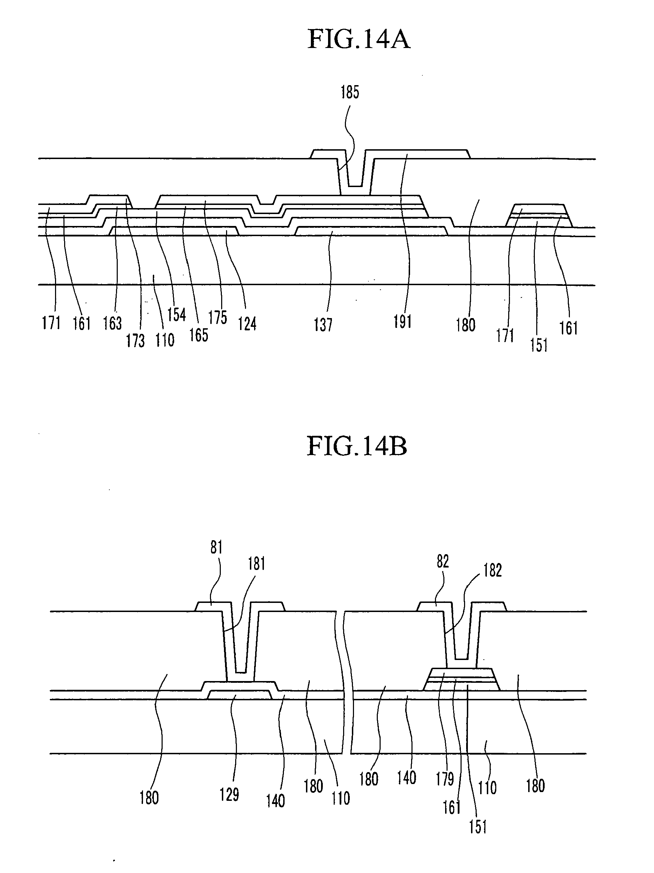

FIG. 13 is a layout view of another example of a thin film transistor array panel in a liquid crystal display according to embodiments of the present invention. FIGs. 14A and 14B are cross-sectional views of the thin film transistor array panel taken along lines XIVA-XIVA and XIVB-XIVB of FIG. 13, respectively.

The construction of this example of the thin film transistor array panel according to the exemplary embodiment is substantially the same as that shown in FIGs. 11 to 12B.

A plurality of gate lines 121 having gate electrodes 124 and end portions 129 and a plurality of storage electrode lines 131 having a plurality of enlarged portions 137 are disposed on substrate 110. A gate insulating layer 140, a plurality of semiconductor stripes 151 having projections 154, a plurality of line-shaped ohmic contacts 161 having projections 163, and a plurality of island-shaped ohmic contacts 165 are sequentially disposed thereon, in this order. Source electrodes 173, a plurality of data lines 171 having end portions 179, and a plurality of drain electrodes 175 are disposed on the ohmic contacts 161 and 165. A passivation layer 180 is disposed thereon. A plurality of contact holes 181, 182, and 185 are formed in passivation layer 180 and the gate insulating layer 140. A plurality of pixel electrodes 191 and a plurality of contact assistants 81 and 82 are disposed thereon.

Unlike the thin film transistor array panel shown in FIGs. 11 to 12B, in the thin film transistor array panel according to the example, the semiconductor stripes 151 have substantially the same planar shape as those of data line 171, drain electrode 175, and the underlying ohmic contacts 161 and 165 except for the projections 154 where the thin film transistors are disposed. Namely, the semiconductor stripes 151 have unexposed portions under data lines 171, drain electrodes 175, and underlying ohmic contacts 161 and 165 and exposed portions that are not covered between the source electrodes 173 and drain electrode 175.

According to the present invention, after the common voltage is fixed to be a predetermined voltage, the levels of the storage signals are changed in a predetermined period and are applied to the storage electrode lines. At this time, storage signals having different voltages are applied to the adjacent storage electrode lines. As a result, the range of the pixel electrode voltage is widened and the range of the pixel voltage is also widened. Since the range of voltage for representing grayscales is widened, image quality can be improved.

In a case where the data voltages having the same range are applied, a wider range of the pixel voltage can be generated to the application of a constant storage signal. Therefore, power consumption is reduced. In addition, the common voltage is fixed at a constant value, so that the power consumption can be further reduced.

In addition, since the range of the pixel electrode voltage before the completion of the charging operation of the liquid crystal is wider than the range of the pixel electrode voltage after the completion of the charging operation of the liquid crystal, a voltage that is higher or lower than the target voltage is applied at the initial time of driving the liquid crystal, the response speed of the liquid crystal can be improved.

While this invention has been described in connection with what is presently considered to be practical exemplary embodiments, it is to be understood by those ordinarily skilled in the art that the invention is not limited to the disclosed embodiments, but, on the contrary, is intended to cover various modifications and equivalent arrangements included within the spirit and scope of the appended claims.

**Claims**

1.  A display device comprising:

    a plurality of gate lines transmitting gate signals, each gate signal having a gate-on voltage and a gate-off voltage;
    a plurality of data lines intersecting the gate lines and transmitting data voltages;
    a plurality of storage electrode lines extending in parallel to the gate lines and transmitting storage signals;
    a plurality of pixels arranged in a matrix, each pixel comprising a switching element connected to a gate line and a data line, a liquid crystal capacitor connected to the switching element and a common voltage, and a storage capacitor connected to the switching element and a storage electrode line; and
    a plurality of storage signal generators generating the storage signals based on the gate signals,

    wherein the storage signal applied to each pixel has a changed voltage level, immediately after the charging a data voltage into the liquid crystal capacitor and the storage capacitor is finished.

2.  The display device of claim 1, wherein when the charged data voltage has a positive polarity, the storage signal is changed from a low level to a high level, and when the charged data voltage has a negative polarity, the storage signal is changed from the high level to the low level.

3.  The display device of claim 2, wherein the gate-on voltage is maintained for about 1 H.

4.  The display device of claim 2, wherein the storage signals applied to adjacent storage electrode lines have different levels from each other, and the storage signal applied to the same storage electrode line is inverted every frame.

5.  The display device of daim 1, wherein the display device performs row inversion.

6.  The display device of daim 1, wherein the common voltage has a constant value.

7.  The display device of claim 1, wherein the storage signal generator is formed along with the gate lines, the data lines, and the storage electrode lines.

8.  The display device of claim 1, wherein the storage signal generator comprises a plurality of signal generating circuits outputting the storage signals to the storage electrode lines, respectively.

9. The display device of claim 8, wherein the respective signal generating circuits comprise:

a driving voltage;
a first switching element having a control terminal connected to a first gate line, an input terminal connected to the driving voltage, and an output terminal connected to a corresponding storage electrode line; and
a second switching element having a control terminal connected to a second gate line adjacent to the first gate line, an input terminal connected to the driving voltage, and an output terminal connected to the storage electrode line.

10. The display device of claim 9, wherein the driving voltage comprises a first level and a second level that is less than the first level, and the level of the driving voltage is inverted every about 1H.

11. The display device of claim 8, wherein the respective signal generating circuit comprises:

a first driving voltage;
a second driving voltage;
a first switching element having a control terminal connected to a first gate line and an output terminal connected to a corresponding storage electrode line; and
a second switching element having a control terminal connected to a second gate line adjacent to the first gate line and an output terminal connected to the storage electrode line,

wherein the first switching element has an input terminal connected to one of the first and second driving voltages, and the second switching element has an input terminal connected to another of the first and second driving voltages.

12. The display device of claim 11, wherein the first and second driving voltages comprise a first level and a second level that is less than the first level, respectively, the first driving voltage has a waveform that is inverted with respect to a waveform of the second driving voltage, and
the first and second driving voltages are inverted every frame.

13. The display device of claim 11, further comprising a first conductor transmitting the first driving voltage and a second conductor transmitting the second driving voltage and that is adjacent to the first conductor in a longitudinal direction, the positions of the first conductor and the second conductor are changed every pixel row, and
the input terminals of the first and second switching elements are connected to the adjacent conductor, respectively.

14. The display device of claim 11, further comprising a first conductor transmitting the first driving voltage and a second conductor transmitting the second driving voltage and that is parallel to the first conductor in a longitudinal direction, and the connection between the input terminals of the first and second switching elements and the first and second conductor are changed ever pixel row.

15. The display device of claim 8, wherein the respective signal generating circuits comprise:

a first driving voltage having a first level;
a second driving voltage having a second level different from the first level;
a first selection voltage;
a second selection voltage having a waveform that is inverted with respect to a waveform of the first selection voltage;
a first switching element having an input terminal connected to the first selection voltage and a control terminal connected to a gate line;
a second switching element having an input terminal connected to the second selection voltage and a control terminal connected to the gate line;
a third switching element having a control terminal connected to an output terminal of the first switching element and an output terminal connected to a corresponding storage electrode line; and
a fourth switching element having a control terminal connected to an output terminal of the second switching element and an output terminal connected to the storage electrode line,

wherein the third switching element has an input terminal connected to one of the first and second driving voltages, and the fourth switching element has an input terminal connected to another of the first and second driving voltages.

**16.** The display device of claim 15, wherein the first and second selection voltages comprise a third level and a fourth level that is less than the third level, respectively, the first selection voltage has a waveform that is inverted with respect to a waveform of the second selection voltage, and the first and second selection voltages are inverted every frame.

**17.** The display device of claim 15, further comprising a first conductor transmitting the first driving voltage and a second conductor transmitting the second driving voltage and that is adjacent to the first conductor in a longitudinal direction, the positions of the first conductor and the second conductor are changed every pixel row, and the input terminals of the third and fourth switching elements are connected to the adjacent conductor, respectively.

**18.** The display device of daim 1, wherein the storage signal generator comprises a shift register having a plurality of stages that are connected to the storage electrode lines, respectively.

**19.** The display device of claim 18, wherein the storage signal generator further comprises a plurality of inverters connected to odd-numbered stages or even-numbered stages.

**20.** The display device of claim 18, wherein the shift register is an integrated circuit.

**21.** A display device having a plurality of intersecting gate lines and data lines defining a matrix of pixels each of which includes a liquid crystal capacitor, the data lines carrying data signals for charging the liquid crystal capacitor with a data voltage, comprising;

a plurality of storage electrode lines extending in parallel to the gate lines;
a storage capacitor for each pixel connected to the storage electrode lines; and
a plurality of storage signal generators connected to the storage electrode lines and generating storage signals for changing the voltage level of the liquid crystal capacitor and the storage capacitor so that when the charged data voltage has a positive polarity, the storage signal is changed from a low level to a high level, and when the charged data voltage has a negative polarity, the storage signal is changed from the high level to a low level.

# FIG.1

# FIG.2

# FIG.3

# FIG.4

# FIG.5A

# FIG.5B

# FIG.6

# FIG.7

# FIG.8

# FIG.9

# FIG.10

# FIG.11

# FIG.12A

185

171 161 163 173 110 154 165 175 124 137 191 180 171 151 161

# FIG.12B

81 181 82 182

180 129 140 180 110 180 140 179 110 180

# FIG.13

FIG.14A

185

171  161  163  154  175  124        137        191        180   171      161
         173  110  165                                        151

FIG.14B

81    181              82    182

180    129    140    180    180    140    179    110    180
                     110         161
                              151

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050120740